# EUROPÄISCHE PATENTSCHRIFT

(11) **EP 3 322 925 B1**
(45) Veröffentlichungstag und Bekanntmachung des Hinweises auf die Patenterteilung: **23.09.2020**
(21) Anmeldenummer: 16740960.6
(22) Anmeldetag: 27.06.2016
(51) Int. Cl.: F16J 15/16, F15B 7/08, F15B 7/10, F15B 15/14, F16J 15/3236, F16J 15/56, F16D 25/08, F16D 48/02

(54) **KOLBEN-ZYLINDER-ANORDNUNG MIT EINER DICHTUNG**
PISTON CYLINDER ARRANGEMENT COMPRISING A SEAL
ENSEMBLE CYLINDRE-PISTON COMPRENANT UN JOINT D'ÉTANCHÉITÉ

(30) Priorität: 15.07.2015 DE 102015213215
(43) Veröffentlichungstag der Anmeldung: 23.05.2018
(73) Patentinhaber: Schaeffler Technologies AG & Co. KG, 91074 Herzogenaurach (DE)
(72) Erfinder: NIESEN, Thomas, 76227 Karlsruhe (DE); KELLER, Jérémy, 67850 Herrlisheim (FR); OSTER, Julien, 67480 Neuhaeusel (FR)
(86) Internationale Anmeldenummer: PCT/DE2016/200292
(87) Internationale Veröffentlichungsnummer: WO 2017/008794

(56) Entgegenhaltungen:
- DE-A1- 10 053 571
- DE-A1- 19 917 006
- DE-A1-102006 047 299
- DE-A1-102014 208 085
- DE-A1-102014 209 026
- US-A1- 2015 123 351

## Beschreibung

Die Erfindung betrifft eine Kolben-Zylinder-Anordnung und umfasst einen in einem Zylinder gelagerten und durch den Druck eines (pneumatischen oder hydraulischen) Druckmediums in einer axialen Richtung verschiebbaren Kolben.

Insbesondere umfasst die Kolben-Zylinder-Anordnung einen Geberzylinder, der mit dem Nehmerzylinder (z. B. CSC - concentric slave cylinder) eines Kupplungseinrücksystems oder Kupplungsausrücksystems, insbesondere für eine Kupplung, insbesondere eines Kraftfahrzeuges zusammenwirkt.

Die Geberzylinder (CMC) lassen sich in zwei Kategorien einteilen, nämlich in Geberzylinder mit stehenden Dichtungen und in Geberzylinder mit bewegten Dichtungen. Derartige Dichtungen werden üblicherweise aus Silikon- oder EPDM-Material hergestellt. Bewegte Dichtungen werden auf dem Kolben angeordnet und fixiert und gegenüber dem Geberzylinder entlang der Gehäusewandung bewegt. Die Dichtungslippe ist dabei im Kontakt mit der Gehäusewandung des Geberzylinders und bildet eine dynamische Dichtfläche aus. Eine solche Dichtung ist beispielsweise aus der Druckschrift DE 10 2014 209 026 A1 bekannt.

Insbesondere ist die hier vorgeschlagene Dichtung eine solche bewegte Dichtung, die auf dem Kolben angeordnet wird.

Solche Dichtungen weisen teilweise erhebliche Nachteile hinsichtlich der Verträglichkeit gegenüber dem Druckmedium auf, die den Lebenszyklus des Produkts (hier der Kolben-Zylinder-Anordnung) verkürzen können. Die Unverträglichkeit mit verschiedenen Bremsflüssigkeiten und deren Bestandteilen führt über die Zeit zu einer Undichtigkeit der Dichtung.

Hiervon ausgehend liegt der vorliegenden Erfindung die Aufgabe zugrunde, die aus dem Stand der Technik bekannten Nachteile zumindest teilweise zu überwinden und insbesondere eine hinsichtlich der Kompatibilität mit verschiedenen Druckmedien robuste Dichtung bereitzustellen, die zusätzlich das Geräuschniveau noch oben begrenzt und die Dichtfunktion im Betrieb der Kolben-Zylinder-Anordnung und während einer Befüllung der Kolben-Zylinder-Anordnung mit einem Druckmedium gewährleistet.

Die Aufgabe wird durch die Merkmale des unabhängigen Patentanspruchs 1 gelöst. Vorteilhafte Weiterbildungen sind Gegenstand der abhängigen Patentansprüche. Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung betrifft eine Kolben-Zylinder-Anordnung, umfassend einen Geberzylinder und einen, innerhalb des Geberzylinders gelagerten und durch den Druck eines Druckmediums entlang der axialen Richtung bewegbaren erfindungsgemäßen Kolben, der mit dem Geberzylinder zumindest einen Sekundärdruckraum ausbildet, wobei der Kolben eine Dichtung aufweist, die auf einer Außenumfangsfläche des Kolbens angeordnet ist und ringförmig ausgebildet und mit einer Innenumfangsfläche auf der Außenumfangsfläche des Kolbens anordenbar ist, wobei die Dichtung eine, in eine axiale Richtung weisende erste Stirnseite und eine gegenüberliegende, durch eine Erstreckung E der Dichtung beabstandete zweite Stirnseite aufweist, wobei an der ersten Stirnseite eine, in einer radialen Richtung nach innen weisende innere Dichtlippe und eine nach außen weisende äußere erste Dichtlippe angeordnet sind, wobei die Dichtung an der zweiten Stirnseite eine in einer Umfangsrichtung umlaufende Ausnehmung aufweist, die sich im Bereich der inneren Umfangsfläche ausgehend von der zweiten Stirnseite entlang der axialen Richtung über eine Länge L erstreckt und weiter an der zweiten Stirnseite eine nach außen weisende zweite Dichtlippe aufweist, und wobei die Dichtung den Sekundärdruckraum gegenüber einer Umgebung außerhalb der Kolben-Zylinder-Anordnung abdichtet und die erste Stirnseite zum Sekundärdruckraum hinweist, wobei die Dichtung so ausgeführt ist, dass in einem ersten Betriebszustand bei Anlegen eines Unterdrucks im Sekundärdruckraum gegenüber der Umgebung, die äußere erste Dichtlippe in der axialen Richtung hin zum Sekundärdruckraum gezogen wird, so dass die Dichtung eine Drehbewegung quer zur axialen Richtung durchführt und die an der zweiten Stirnseite angeordnete nach außen weisende zweite Dichtlippe hin zur Gehäusewand des Geberzylinders bewegt wird und dort eine zweite äußere Dichtfläche bildet.

Die Dichtung weist also insbesondere eine gewisse Verformbarkeit auf, die durch die Form und besondere Ausgestaltung der Dichtung ermöglicht wird.

Insbesondere weist die Innenumfangsfläche in einem an die Ausnehmung (unmittelbar) angrenzenden zweiten Bereich einen ersten Durchmesser D1 und die Dichtung in der Ausnehmung einen (größten) zweiten Durchmesser D2 auf, wobei D2 mindestens
a) D1 + 1 mm [Millimeter], insbesondere mindestens D1 + 3 mm, und/oder
b) 1,01 x D1, insbesondere mindestens 1,03 x D1,
beträgt und wobei die Länge L mindestens
i) 1 mm, insbesondere mindestens 2 mm, und/oder
ii) 0,1 x E, insbesondere mindestens 0,2 x E,
beträgt.

Bevorzugt weist die Ausnehmung ein virtuelles (gedachtes) Volumen auf, wobei das virtuelle Volumen durch eine virtuelle Verlängerung der zweiten Stirnseite entlang der radialen Richtung und durch eine virtuelle Verlängerung der Innenumfangsfläche entlang der axialen Richtung sowie durch eine Wandung der Dichtung in der Ausnehmung gebildet ist, wobei das virtuelle Volumen mindestens
a. π x D1 x 1 mm², insbesondere mindestens π x D1 x 3 mm², und/oder
b. π x D1 x 1,01 x D1 x 0,1 x E, insbesondere mindestens π x D1 x 1,03 x D1 x 0,2 x E
beträgt.

Dieses virtuelle Volumen liegt insbesondere bei nichtmontierter Dichtung vor. Bevorzugt gelten die unter a), b), i), ii), a. und b. genannten Bedingungen aber auch für eine auf einem Kolben bereits montierte Dichtung (obwohl dann, aufgrund der nun vorgespannten Dichtung, etwas veränderte Werte für D1, D2 und ggf. auch E vorliegen).

Gemäß einer bevorzugten Weiterbildung weist der Kolben an der Außenumfangsfläche einen Anschlag auf, wobei der Anschlag mit der ersten Stirnseite der Dichtung zusammenwirkt und eine Bewegung der Dichtung entlang der axialen Richtung begrenzt. Der Anschlag wird insbesondere durch eine Erhebung auf der Außenumfangsfläche gebildet (weist also einen größeren Durchmesser auf als der Bereich der Außenumfangsfläche, auf dem die Dichtung angeordnet ist).

Insbesondere findet der Geberzylinder innerhalb einer hydraulischen Strecke, insbesondere zur Kupplungsbetätigung als CMC (clutch master cylinder) Anwendung und Kolben und Geberyzylinder bilden zusätzlich einen Primärdruckraum aus, der durch eine Primärdichtung zwischen Kolben und Geberzylinder gegenüber dem Sekundärdruckraum abgedichtet ist.

Die Begriffe "Primärdruckraum" und "Sekundärdruckraum" sind dem Fachmann bekannt, z. B. aus der DE 298 22 705 U1.

Bevorzugt umfasst der erste Betriebszustand, dass der Primärdruckraum mit einem Druckmedium befüllt wird, wobei dabei im Sekundärdruckraum gegenüber der Umgebung und dem Primärdruckraum ein Unterdruck angelegt ist. Dieser erste Betriebszustand umfasst z. B. eine Befüllung der Kolben-Zylinder-Anordnung mit einem Druckmedium bei der Inbetriebnahme. Dafür wird im Sekundärdruckraum insbesondere ein Vakuum (ein starker Unterdruck, z. B. weniger als 100 mbar [Millibar], insbesondere weniger als 1 mbar) angelegt, so dass beim Einfüllen des Druckmediums (z. B. ein Hydrauliköl) keine Luft in das hydraulische System eindringen kann. Bei diesem Anlegen eines Unterdrucks entsteht eine Druckdifferenz zur Umgebung, durch die die Dichtung gegen den Anschlag rutscht und dabei mit dem Anschlag eine weitere Dichtfläche bildet. Bei steigender Druckdifferenz wird die äußere erste Dichtlippe in der axialen Richtung hin zum Sekundärdruckraum gezogen, so dass die Dichtung eine Drehbewegung quer zur axialen Richtung durchführt und die an der zweiten Stirnseite angeordnete nach außen weisende zweite Dichtlippe hin zur Gehäusewand des Geberzylinders bewegt wird und dort eine zweite äußere Dichtfläche bildet. Diese zweite Dichtlippe dichtet den Sekundärdruckraum gegen die Umgebung ab. Damit ermöglicht das hier vorgeschlagene Design der Dichtung einen sich selbst verstärkenden Mechanismus für den Vorgang der (Vakuum-) Befüllung.

Insbesondere ist in einem zweiten Betriebszustand in dem Sekundärdruckraum ein Druckmedium angeordnet, wobei der Druck in dem Sekundärdruckraum mindestens so groß ist wie in der Umgebung, wobei die äußere erste Dichtlippe mit der Gehäusewand eine erste äußere Dichtfläche ausbildet und die zweite Dichtlippe von der Gehäusewand beabstandet angeordnet ist. Dieser zweite Betriebszustand liegt insbesondere im regulären Betrieb der Kolben-Zylinder-Anordnung vor.

Insbesondere ist die Dichtung auf dem Kolben angeordnet und mit dem Kolben gegenüber der Gehäusewand des Geberzylinders entlang der axialen Richtung bewegbar.

Insbesondere umfasst die Kolben-Zylinder-Anordnung einen Kupplungsgeberzylinder oder einen Kupplungsnehmerzylinder und ist durch ein hydraulisches (z. B. ein Öl) oder pneumatisches (z. B. Druckluft) Druckmedium betätigbar.

Bevorzugt wird die Dichtungsanordnung in einem Kupplungseinrücksystem oder Kupplungsausrücksystem einer Kupplung eines Kraftfahrzeuges eingesetzt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: ein Kraftfahrzeug mit einer Kupplung und einem Kupplungsausrücksystem im Schnitt;
- Fig. 2:: eine Kolben-Zylinder-Anordnung in einer Seitenansicht im Schnitt;
- Fig. 3:: einen Ausschnitt aus der Darstellung gemäß Fig. 2;
- Fig. 4:: einen Ausschnitt aus der Darstellung gemäß Fig. 3; und
- Fig. 5:: eine Dichtung in einer Seitenansicht im Schnitt.

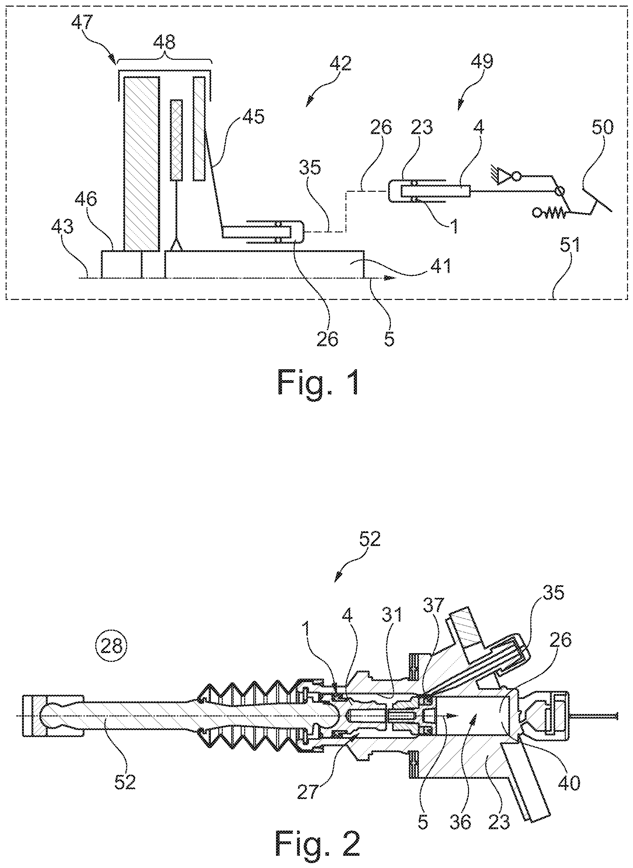

Fig. 1 zeigt ein Kraftfahrzeug 51 mit einer Kupplung 47 und einem Kupplungsausrücksystem 45 im Schnitt. Das Kupplungsausrücksystem 45 umfasst u. a. eine Kolben-Zylinder-Anordnung 49 mit einem Geberzylinder 23 und einem darin entlang der axialen Richtung 5 bewegbaren Kolben 4, die über ein Kupplungspedal 50 betätigt wird. Die Kolben-Zylinder-Anordnung 49 ist über eine hydraulische Strecke 35 (Druckleitung) mit einem Kupplungsnehmerzylinder 42 verbunden. In der Kolben-Zylinder-Anordnung 49 ist der Kolben 4 über eine Dichtung 1 gegenüber dem Geberzylinder 23 abgedichtet. Über die Betätigung des Kupplungspedals 50 wird in der Kolben-Zylinder-Anordnung 49 ein Druckmedium 26 in der hydraulischen Strecke 35 bewegt und so der Kolben in dem Kupplungsnehmerzylinder 42 betätigt. Der Kolben des Kupplungsnehmerzylinders 42 ist über eine Ausrückfeder 44 mit dem Reibpaket 48 der Kupplung 47 verbunden, so dass eine Abtriebswelle 46 mit einer Getriebeeingangswelle 41 zur Übertragung von Drehmomenten verbindbar, bzw. eine bestehende Verbindung lösbar ist.

Abtriebswelle 46, Getriebeeingangswelle 41 und Kupplung 47 rotieren um eine gemeinsame Drehachse 43.

Fig. 2 zeigt eine Kolben-Zylinder-Anordnung 49 in einer Seitenansicht im Schnitt. Die Kolben-Zylinder-Anordnung 49 umfasst einen Geberzylinder 23 und einen, innerhalb des Geberzylinders 23 gelagerten und durch den Druck 40 eines Druckmediums 26 entlang der axialen Richtung 5 bewegbaren Kolben 4. Eine Kolbenstange 52 ist mit dem Kolben 4 verbunden. Der Kolben 4 weist eine Dichtung 1 auf, die auf der Außenumfangsfläche 3 des Kolbens 4 angeordnet ist und mit dem Kolben 4 entlang der Gehäusewand 31 bewegbar ist. Der Kolben 4 und der Geberzylinder 23 bilden einen Sekundärdruckraum 27 aus, wobei die Dichtung 1 den Sekundärdruckraum 27 gegenüber einer Umgebung 28 außerhalb der Kolben-Zylinder-Anordnung 49 abdichtet.

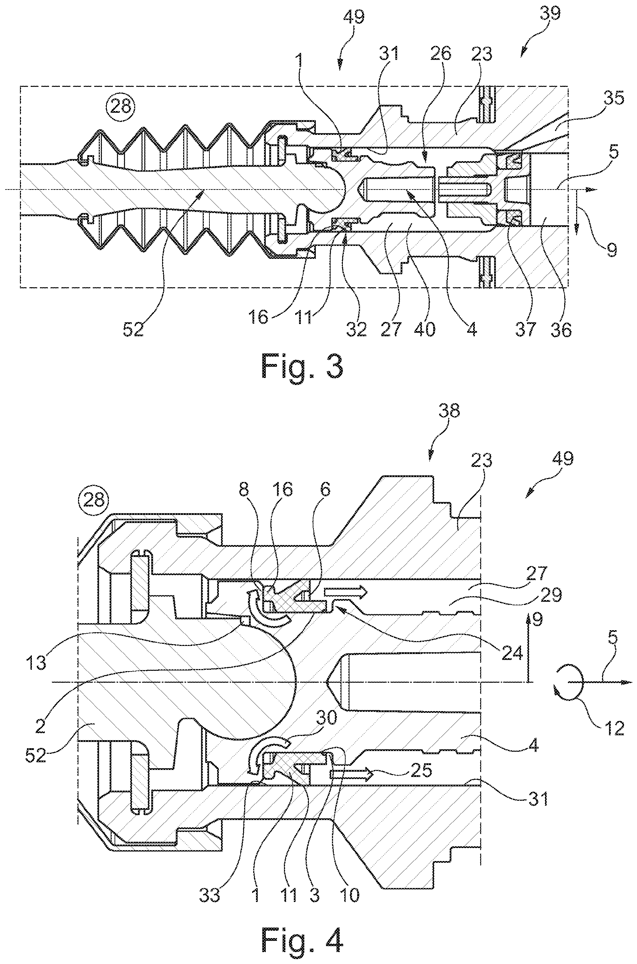

Fig. 3 zeigt einen Ausschnitt aus der Darstellung gemäß Fig. 2. Der Geberzylinder 23 ist innerhalb einer hydraulischen Strecke 35 angeordnet und Kolben 4 und Geberyzylinder 23 bilden einen Primärdruckraum 36 aus, der durch eine Primärdichtung 37 zwischen Kolben 4 und Geberzylinder 23 gegenüber dem Sekundärdruckraum 27 abgedichtet ist. In einem zweiten Betriebszustand 39 ist in dem Sekundärdruckraum 27 ein Druckmedium 26 angeordnet, wobei der Druck 40 in dem Sekundärdruckraum 27 mindestens so groß ist wie in der Umgebung 28, wobei die äußere erste Dichtlippe 11 mit der Gehäusewand 31 eine erste äußere Dichtfläche 32 ausbildet und die zweite Dichtlippe 16 von der Gehäusewand 31 beabstandet angeordnet ist. Dieser zweite Betriebszustand 39 liegt insbesondere im regulären Betrieb der Kolben-Zylinder-Anordnung 49 vor.

Fig. 4 zeigt einen Ausschnitt aus der Darstellung gemäß Fig. 3. Die Dichtung 1 ist ringförmig ausgebildet und mit einer Innenumfangsfläche 2 auf einer Außenumfangsfläche 3 des Kolbens 4 angeordnet, wobei die Dichtung 1 eine, in eine axiale Richtung 5 weisende erste Stirnseite 6 und eine gegenüberliegende zweite Stirnseite 8 aufweist. An der ersten Stirnseite 6 sind eine, in einer radialen Richtung 9 nach innen weisende innere Dichtlippe 10 und eine nach außen weisende äußere erste Dichtlippe 11 angeordnet, wobei die Dichtung 1 an der zweiten Stirnseite 8 eine in einer Umfangsrichtung 12 umlaufende Ausnehmung 13 aufweist. Weiter weist die Dichtung 1 an der zweiten Stirnseite 8 eine nach außen weisende zweite Dichtlippe 16 auf.

Der Kolben 4 und der Geberzylinder 23 bilden einen Sekundärdruckraum 27 aus, wobei die Dichtung 1 den Sekundärdruckraum 27 gegenüber einer Umgebung 28 außerhalb der Kolben-Zylinder-Anordnung 49 abdichtet. Die erste Stirnseite 5 weist zum Sekundärdruckraum 27 hin, wobei die Dichtung 1 so ausgeführt ist, dass in einem ersten Betriebszustand 38 bei Anlegen eines Unterdrucks 29 im Sekundärdruckraum 27 gegenüber der Umgebung 28, die äußere erste Dichtlippe 11 in der axialen Richtung 5 hin zum Sekundärdruckraum 27 gezogen wird. Bei diesem Anlegen eines Unterdrucks 29 entsteht eine Druckdifferenz zur Umgebung 28, durch die die Dichtung 1 hin zum Anschlag 24 eine Bewegung 25 ausführt und so gegen den Anschlag 24 rutscht und dabei mit dem Anschlag 24 eine weitere Dichtfläche bildet. Bei steigender Druckdifferenz wird die äußere erste Dichtlippe 11 in der axialen Richtung 5 hin zum Sekundärdruckraum 27 gezogen, so dass die Dichtung 1 eine Drehbewegung 30 quer zur axialen Richtung 5 durchführt und die an der zweiten Stirnseite 8 angeordnete, nach außen weisende zweite Dichtlippe 16 hin zur Gehäusewand 31 des Geberzylinders 23 bewegt wird und dort eine zweite äußere Dichtfläche 33 bildet. Diese zweite Dichtlippe 16 dichtet den Sekundärdruckraum 27 zusätzlich (zusammen mit der äußeren ersten Dichtlippe 11) gegen die Umgebung 28 ab. Damit ermöglicht das hier vorgeschlagene Design der Dichtung 1 einen sich selbst verstärkenden Mechanismus für den Vorgang der (Vakuum-) Befüllung.

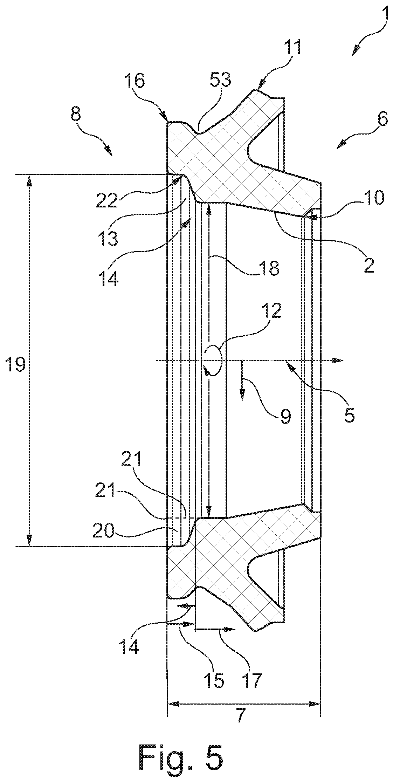

Fig. 5 zeigt eine (nichtmontierte) Dichtung 1 in einer Seitenansicht im Schnitt. Die Dichtung 1 ist ringförmig ausgebildet und mit einer Innenumfangsfläche 2 auf einer Außenumfangsfläche 3 eines Kolbens 4 anordenbar. Die Dichtung 1 weist eine, in eine axiale Richtung 5 weisende erste Stirnseite 6 und eine gegenüberliegende, durch eine Erstreckung E 7 der Dichtung 1 beabstandete, zweite Stirnseite 8 auf, wobei an der ersten Stirnseite 6 eine, in einer radialen Richtung 9 nach innen weisende innere Dichtlippe 10 und eine nach außen weisende äußere erste Dichtlippe 11 angeordnet sind. Die Dichtung 1 weist an der zweiten Stirnseite 8 eine in einer Umfangsrichtung 12 umlaufende Ausnehmung 13 auf, die sich im ersten Bereich 14 der Innenumfangsfläche 2 ausgehend von der zweiten Stirnseite 8 entlang der axialen Richtung 5 über eine Länge L 15 erstreckt und weiter an der zweiten Stirnseite 8 eine nach außen weisende zweite Dichtlippe 16. Die Innenumfangsfläche 2 weist in einem an die Ausnehmung 13 (unmittelbar) angrenzenden zweiten Bereich 17 einen ersten Durchmesser D1 18 und die Dichtung 1 in der Ausnehmung 13 einen zweiten Durchmesser D2 19 auf, wobei D2 größer als D1 ist.

Die Ausnehmung 13 weist ein virtuelles Volumen 20 auf, wobei das virtuelle Volumen 20 durch eine virtuelle Verlängerung 21 der zweiten Stirnseite 8 entlang der radialen Richtung 9 und durch eine virtuelle Verlängerung 21 der Innenumfangsfläche 2 entlang der axialen Richtung 5 sowie durch eine Wandung 22 der Dichtung 1 in der Ausnehmung 13 gebildet ist.

Die Dichtung 1 weist eine gewisse Verformbarkeit auf, die durch die Form und besondere Ausgestaltung der Dichtung 1 ermöglicht wird. Z. B. ist hier zwischen der zweiten Dichtlippe 16 und der äußeren ersten Dichtlippe 11 eine Senke 53 vorgesehen, durch die eine Drehbewegung 30 (siehe in Fig. 4) der Dichtung 1 ermöglicht/erleichtert wird. Die Ausnehmung 13 erfüllt hier dieselbe Funktion. Ausnehmung 13 und Senke 53 ermöglichen gerade gemeinsam, dass die auf einem Kolben 4 montierte Dichtung 1 bei entsprechenden Druckverhältnissen eine Bewegung 25 bzw. eine Drehbewegung 30 ausführen kann, so dass die zweite Dichtlippe 16 eine zusätzliche zweite äußere Dichtfläche 33 mit der Gehäusewand 31 des Geberzylinders 23 bildet.

Damit wird gerade bei der Befüllung (erster Betriebszustand 38) der Kolben-Zylinder-Anordnung 49 mit einem Druckmedium 26 sichergestellt, dass keine Luft in das hydraulische System eindringt, wobei bei einem regulären Betrieb (zweiter Betriebszustand 39) der Kolben-Zylinder-Anordnung 49 keine Veränderung der ursprünglich vorgesehenen Dichtflächen (nämlich nur erste äußere Dichtfläche 32 in Funktion, zweite Dichtlippe 16 dann beabstandet von Gehäusewand 31 angeordnet) auftritt.

### Bezugszeichen liste

- 1: Dichtung
- 2: Innenumfangsfläche
- 3: Außenumfangsfläche
- 4: Kolben
- 5: axiale Richtung
- 6: erste Stirnseite
- 7: Erstreckung E
- 8: zweite Stirnseite
- 9: radiale Richtung
- 10: innere Dichtlippe
- 11: äußere erste Dichtlippe
- 12: Umfangsrichtung
- 13: Ausnehmung
- 14: Erster Bereich
- 15: Länge L
- 16: zweite Dichtlippe
- 17: zweiter Bereich
- 18: erster Durchmesser D1
- 19: zweiter Durchmesser D2
- 20: virtuelles Volumen
- 21: virtuelle Verlängerung
- 22: Wandung
- 23: Geberzylinder
- 24: Anschlag
- 25: Bewegung
- 26: Druckmedium
- 27: Sekundärdruckraum
- 28: Umgebung
- 29: Unterdruck
- 30: Drehbewegung
- 31: Gehäusewand
- 32: Erste äußere Dichtfläche
- 33: zweite äußere Dichtfläche
- 34: innere Dichtfläche
- 35: hydraulische Strecke
- 36: Primärdruckraum
- 37: Primärdichtung
- 38: erster Betriebszustand
- 39: zweiter Betriebszustand
- 40: Druck
- 41: Getriebeeingangswelle
- 42: Kupplungsnehmerzylinder
- 43: Drehachse
- 44: Ausrückfeder
- 45: Kupplungsausrücksystem
- 46: Abtriebswelle
- 47: Kupplung
- 48: Reibpaket
- 49: Kolben-Zylinder-Anordnung
- 50: Kupplungspedal
- 51: Kraftfahrzeug
- 52: Kolbenstange
- 53: Senke

## Patentansprüche

1. Kolben-Zylinder-Anordnung (49) umfassend einen Geberzylinder (23) und einen, innerhalb des Geberzylinders (23) gelagerten und durch den Druck eines Druckmediums (26) entlang der axialen Richtung (5) bewegbaren Kolben (4), der mit dem Geberzylinder (23) zumindest einen Sekundärdruckraum (27) ausbildet, wobei der Kolben (4) eine Dichtung (1) aufweist, die auf einer Außenumfangsfläche (3) des Kolbens (4) angeordnet ist und ringförmig ausgebildet und mit einer Innenumfangsfläche (2) auf der Außenumfangsfläche (3) des Kolbens (4) angeordnet ist, wobei die Dichtung (1) eine, in eine axiale Richtung (5) weisende erste Stirnseite (6) und eine gegenüberliegende, durch eine Erstreckung E (7) der Dichtung (1) beabstandete zweite Stirnseite (8) aufweist, wobei an der ersten Stirnseite (6) eine, in einer radialen Richtung (9) nach innen weisende innere Dichtlippe (10) und eine nach außen weisende äußere erste Dichtlippe (11) angeordnet sind, wobei die Dichtung (1) den Sekundärdruckraum (27) gegenüber einer Umgebung (28) außerhalb der Kolben-Zylinder-Anordnung (49) abdichtet und die erste Stirnseite (6) zum Sekundärdruckraum (27) hinweist, **dadurch gekennzeichnet, dass** die Dichtung (1) an der zweiten Stirnseite (8) eine in einer Umfangsrichtung (12) umlaufende Ausnehmung (13) aufweist, die sich in einem ersten Bereich (14) der Innenumfangsfläche (2) ausgehend von der zweiten Stirnseite (8) entlang der axialen Richtung (5) über eine Länge L (15) erstreckt und weiter an der zweiten Stirnseite (8) eine nach außen weisende zweite Dichtlippe (16) aufweist, wobei die Dichtung (1) so ausgeführt ist, dass in einem ersten Betriebszustand (38) bei Anlegen eines Unterdrucks (29) im Sekundärdruckraum (27) gegenüber der Umgebung (28), die äußere erste Dichtlippe (11) in der axialen Richtung (5) hin zum Sekundärdruckraum (27) gezogen wird, so dass die Dichtung (1) eine Drehbewegung (30) quer zur axialen Richtung (5) durchführt und die an der zweiten Stirnseite (8) angeordnete nach außen weisende zweite Dichtlippe (16) hin zu einer Gehäusewand (31) des Geberzylinders (23) bewegt wird und dort eine zweite äußere Dichtfläche (33) bildet..

2. Kolben-Zylinder-Anordnung (49) nach Anspruch 1, wobei die Innenumfangsfläche (2) in einem an die Ausnehmung (13) angrenzenden zweiten Bereich (17) einen ersten Durchmesser D1 (18) und die Dichtung (1) in der Ausnehmung (13) einen zweiten Durchmesser D2 (19) aufweist, wobei D2 (19) mindestens
a) D1 + 1 mm [Millimeter] und/oder
b) 1,01 x D1
beträgt und wobei die Länge L (15) mindestens
i) 1 mm und/oder
ii) 0,1 x E
beträgt.

3. Kolben-Zylinder-Anordnung (49) nach Anspruch 1 oder 2, wobei die Ausnehmung (13) ein virtuelles Volumen (20) aufweist, wobei das virtuelle Volumen (20) durch eine virtuelle Verlängerung (21) der zweiten Stirnseite (8) entlang der radialen Richtung (9) und durch eine virtuelle Verlängerung (21) der Innenumfangsfläche (2) entlang der axialen Richtung (5) sowie durch eine Wandung (22) der Dichtung (1) in der Ausnehmung (13) gebildet ist, wobei das virtuelle Volumen (20) mindestens
a. π x D1 x 1 mm² und/oder
b. π x D1 x 1,01 x D1 x 0,1 x E
beträgt.

4. Kolben-Zylinder-Anordnung (49) nach einem der Ansprüche 1 bis 3, wobei der Kolben (3) an der Außenumfangsfläche (3) einen Anschlag (24) aufweist, wobei der Anschlag (24) mit der ersten Stirnseite (6) der Dichtung (1) zusammenwirkt und eine Bewegung (25) der Dichtung (1) entlang der axialen Richtung (5) begrenzt.

5. Kolben-Zylinder-Anordnung (49) nach einem der Ansprüche 1 bis 4, wobei der Geberzylinder (23) innerhalb einer hydraulischen Strecke (35), insbesondere zur Kupplungs- oder Bremsbetätigung als Geberzylinder Anwendung findet und Kolben (4) und Geberzylinder (23) zusätzlich einen Primärdruckraum (36) ausbilden, der durch eine Primärdichtung (37) zwischen Kolben (4) und Geberzylinder (23) gegenüber dem Sekundärdruckraum (27) abgedichtet ist.

6. Kolben-Zylinder-Anordnung (49) nach Anspruch 5, wobei der erste Betriebszustand (38) umfasst, dass der Primärdruckraum (36) mit einem Druckmedium (26) befüllt wird, wobei dabei im Sekundärdruckraum (27) gegenüber der Umgebung (28) und dem Primärdruckraum (36) ein Unterdruck (29) angelegt ist.

7. Kolben-Zylinder-Anordnung (49) nach Anspruch 6, wobei in einem zweiten Betriebszustand (39) in dem Sekundärdruckraum (27) ein Druckmedium (26) angeordnet ist, wobei der Druck (40) in dem Sekundärdruckraum (27) mindestens so groß ist wie in der Umgebung (28), wobei die äußere erste Dichtlippe (11) mit der Gehäusewand (31) eine erste äußere Dichtfläche (32) ausbildet und die zweite Dichtlippe (16) von der Gehäusewand (31) beabstandet angeordnet ist.

8. Kolben-Zylinder-Anordnung (49) nach einem der vorhergehenden Ansprüche, wobei die Dichtung (1) auf dem Kolben (4) angeordnet ist und mit dem Kolben (4) gegenüber der Gehäusewand (31) des Geberzylinders (23) entlang der axialen Richtung (5) bewegbar ist.

## Claims

1. A piston cylinder arrangement (49) comprising a master cylinder (23) and a piston (4), which is mounted within the master cylinder (23) and can be moved along the axial direction (5) by the pressure of a pressure medium (26), and which, together with the master cylinder (23), forms at least one secondary pressure chamber (27), wherein the piston (4) has a seal (1) which is arranged on an outer circumferential surface (3) of the piston (4) and is annular and is arranged with an inner circumferential surface (2) on the outer circumferential surface (3) of the piston (4), wherein the seal (1) has a first end face (6) facing in an axial direction (5) and an opposite second end face (8) spaced apart by an extent E (7) of the seal (1), wherein an inner sealing lip (10) facing inwardly in a radial direction (9) and an outwardly facing outer first sealing lip (11) are arranged on the first end face (6), wherein the seal (1) seals the secondary pressure chamber (27) with respect to an environment (28) outside the piston cylinder arrangement (49) and the first end face (6) points towards the secondary pressure chamber (27), **characterised in that** the seal (1) on the second end face (8) has a recess (13) extending in a circumferential direction (12), which recess extends in a first region (14) of the inner circumferential surface (2) starting from the second end face (8) along the axial direction (5) over a length L (15) and further has an outwardly facing second sealing lip (16) on the second end face (8), wherein the seal (1) is designed such that in a first operating state (38), when a negative pressure (29) is applied in the secondary pressure chamber (27) as compared to the environment (28), the outer first sealing lip (11) is pulled in the axial direction (5) towards the secondary pressure chamber (27) so that the seal (1) performs a rotary movement (30) transverse to the axial direction (5) and the outwardly facing second sealing lip (16) arranged on the second end face (8) is moved towards a housing wall (31) of the master cylinder (23) and forms there a second outer sealing surface (33).

2. The piston cylinder arrangement (49) according to claim 1, wherein the inner circumferential surface (2) in a second region (17) adjoining the recess (13) has a first diameter D1 (18) and the seal (1) in the recess (13) has a second diameter D2 (19), with D2 (19) being at least
a) D1 + 1 mm [millimetres] and/or
b) 1.01 x D1
and the length L (15) being at least
i) 1 mm and/or
ii) 0.1 x E.

3. The piston cylinder arrangement (49) according to claim 1 or 2, wherein the recess (13) has a virtual volume (20), wherein the virtual volume (20) is formed by a virtual extent (21) of the second end face (8) along the radial direction (9) and by a virtual extent (21) of the inner circumferential surface (2) along the axial direction (5) and by a wall (22) of the seal (1) in the recess (13), the virtual volume (20) being at least
a. π x D1 x 1 mm² and/or
b. π x D1 x 1.01 x D1 x 0.1 x E.

4. The piston cylinder arrangement (49) according to any one of claims 1 to 3, wherein the piston (3) on the outer circumferential surface (3) has a stop (24), wherein the stop (24) cooperates with the first end face (6) of the seal (1) and limits a movement (25) of the seal (1) along the axial direction (5).

5. The piston cylinder arrangement (49) according to any one of claims 1 to 4, wherein the master cylinder (23) is used as master cylinder within a hydraulic path (35), in particular for clutch or brake actuation, and the piston (4) and master cylinder (23) additionally form a primary pressure chamber (36), which is sealed off from the secondary pressure chamber (27) by a primary seal (37) between the piston (4) and master cylinder (23).

6. The piston cylinder arrangement (49) according to claim 5, wherein the first operating state (38) comprises that the primary pressure chamber (36) is filled with a pressure medium (26), wherein in the secondary pressure chamber (27) a negative pressure (29) with respect to both the environment (28) and the primary pressure chamber (36) is applied.

7. The piston cylinder arrangement (49) according to claim 6, wherein in a second operating state (39) a pressure medium (26) is arranged in the secondary pressure chamber (27), wherein the pressure (40) in the secondary pressure chamber (27) is at least as great as in the environment (28), wherein the outer first sealing lip (11) forms a first outer sealing surface (32) with the housing wall (31) and the second sealing lip (16) is arranged at a distance from the housing wall (31).

8. The piston cylinder arrangement (49) according to any one of the preceding claims, wherein the seal (1) is arranged on the piston (4) and is movable with the piston (4) with respect to the housing wall (31) of the master cylinder (23) along the axial direction (5).

## Revendications

1. Ensemble cylindre-piston (49) comprenant un maître-cylindre (23) et un piston (4), qui est monté à l'intérieur du maître-cylindre (23) et pouvant être déplacé le long de la direction axiale (5) par la pression d'un moyen de pression (26), lequel piston forme au moins une chambre de pression secondaire (27) avec le maître-cylindre (23), ledit piston (4) ayant un joint (1) lequel est disposé sur une surface périphérique extérieure (3) du piston (4) et est annulaire et est disposé avec une surface périphérique intérieure (2) sur la surface périphérique extérieure (3) du piston (4), ledit joint (1) ayant une première face frontale (6) orientée dans une direction axiale (5) et une seconde face frontale (8) opposée qui est espacée par un prolongement E (7) dudit joint (1), dans lequel sur la première face frontale (6) sont disposées une lèvre d'étanchéité interne (10) orientée vers l'intérieur dans une direction radiale (9) et une première lèvre d'étanchéité externe (11) orientée vers l'extérieur, le joint (1) assurant l'étanchéité de la chambre de pression secondaire (27) par rapport à un environnement (28) à l'extérieur de l'ensemble cylindre-piston (49) et la première face frontale (6) étant orientée vers la chambre de pression secondaire (27), **caractérisé en ce que** le joint (1) présente sur la seconde face frontale (8) un évidement (13) s'étendant dans une direction périphérique (12) qui s'étend dans une première zone (14) de la surface périphérique intérieure (2) à partir de la seconde face frontale (8) le long de la direction axiale (5) sur une longueur L (15) et présente en outre sur la seconde face frontale (8) une seconde lèvre d'étanchéité (16) tournée vers l'extérieur, le joint (1) étant conçu de telle sorte que dans un premier état de fonctionnement (38), lorsqu'une pression négative (29) est appliquée dans la chambre de pression secondaire (27) par rapport à l'environnement (28), la première lèvre d'étanchéité extérieure (11) est tirée dans la direction axiale (5) vers la chambre de pression secondaire (27) de sorte que le joint (1) effectue un mouvement de rotation (30) transversal à la direction axiale (5) et que la seconde lèvre d'étanchéité (16) dirigée vers l'extérieur et disposée sur la seconde face frontale (8) est déplacée vers une paroi de boîtier (31) du maître-cylindre (23) où elle forme une seconde surface d'étanchéité extérieure (33).

2. Ensemble cylindre-piston (49) selon la revendication 1, dans lequel la surface périphérique intérieure (2) présente un premier diamètre D1 (18) dans une seconde zone (17) contiguë à l'évidement (13) et le joint (1) présente un second diamètre D2 (19) dans l'évidement (13), avec D2 (19) égal à au moins
a) D1 + 1 mm [millimètres] et / ou
b) 1,01 x D1
et la longueur L (15) égale à au moins
i) 1 mm et / ou
ii) 0,1 x E.

3. Ensemble cylindre-piston (49) selon la revendication 1 ou 2, l'évidement (13) présentant un volume virtuel (20), ledit volume virtuel (20) étant formé par un prolongement virtuel (21) de la seconde face frontale (8) le long de la direction radiale (9) et par un prolongement virtuel (21) de la surface périphérique intérieure (2) dans la direction axiale (5) et par une paroi (22) du joint (1) dans l'évidement (13), le volume virtuel (20) étant égal à au moins
a. π x D1 x 1 mm² et / ou
b. π x D1 x 1,01 x D1 x 0,1 x E.

4. Ensemble cylindre-piston (49) selon l'une quelconque des revendications 1 à 3, dans lequel le piston (3) sur la surface périphérique extérieure (3) présente une butée (24), ladite butée (24) agissant conjointement avec la première face frontale (6) du joint (1) et limitant le mouvement (25) du joint (1) le long de la direction axiale (5).

5. Ensemble cylindre-piston (49) selon l'une quelconque des revendications 1 à 4, le maître-cylindre (23) étant utilisé comme maître-cylindre dans une voie hydraulique (35), en particulier pour actionner l'embrayage ou le frein, et le piston (4) et le maître-cylindre (23) forment en outre une chambre de pression primaire (36), qui est rendue étanche par rapport à la chambre de pression secondaire (27) par un joint primaire (37) entre le piston (4) et le maître-cylindre (23).

6. Ensemble cylindre-piston (49) selon la revendication 5, dans lequel le premier état de fonctionnement (38) comprend le fait que la chambre de pression primaire (36) est remplie d'un fluide de pression (26), dans lequel une dépression (29) est appliquée dans la chambre de pression secondaire (27) par rapport à l'environnement (28) et à la chambre de pression primaire (36).

7. Ensemble cylindre-piston (49) selon la revendication 6, dans lequel, dans un second état de fonctionnement (39), un fluide de pression (26) est disposé dans la chambre de pression secondaire (27), la pression (40) dans la chambre de pression secondaire (27) étant au moins aussi grande que dans l'environnement (28), la première lèvre d'étanchéité externe (11) formant une première surface d'étanchéité externe (32), la paroi de boîtier (31) et la seconde lèvre d'étanchéité (16) étant disposées à distance de la paroi de boîtier (31).

8. Ensemble cylindre-piston (49) selon l'une quelconque des revendications précédentes, dans lequel le joint (1) est disposé sur le piston (4) et est mobile avec le piston (4) par rapport à la paroi du boîtier (31) du maître-cylindre (23) le long de la direction axiale (5).
